# EUROPÄISCHE PATENTSCHRIFT

(11) **EP 2 106 933 B1**
(45) Veröffentlichungstag und Bekanntmachung des Hinweises auf die Patenterteilung: **22.06.2011**
(21) Anmeldenummer: 09154065.8
(22) Anmeldetag: 02.03.2009
(51) Int. Cl.: B60D 1/46

(54) **Anordnung zur höhenverstellbaren Anbringung einer Anhängekupplung an einem Zugfahrzeug**
Assembly for attaching a height adjustable draw bar to a towing vehicle
Agencement d'application réglable en hauteur d'un embrayage de remorque sur un véhicule de traction

(30) Priorität: 03.04.2008 DE 102008017015
(43) Veröffentlichungstag der Anmeldung: 07.10.2009
(73) Patentinhaber: Deere & Company, Moline, IL 61265 (US)
(72) Erfinder: Zahn, Werner, 67454 Hassloch (DE)
(74) Vertreter: Holst, Sönke

(56) Entgegenhaltungen:
- EP-A- 1 683 659
- WO-A-2008/053354
- CH-A- 365 955

## Beschreibung

Die Erfindung betrifft eine Anordnung zur höhenverstellbaren Anbringung einer Anhängekupplung an einem Zugfahrzeug, mit zwei sich gegenüberliegend angeordneten, in vertikaler Richtung erstreckenden Führungen, zwischen denen ein mit einer Anhängekupplung verbundener Kupplungsträger höhenverstellbar anordenbar ist, wobei dem Zwischenraum zwischen den Führungen ein Zapfwellenanschluss zugeordnet ist und die Führungen an ihren aneinander zugewandten Innenseiten jeweils mit wenigstens einem ausgesparten Bereich versehen sind.

### Stand der Technik

Im Stande der Technik (DE 1 791 103 U, DE 92 11 294 U, DE 10 2004 004 082 A) setzen sich Anordnungen zur höhenverstellbaren Anbringung einer Anhängekupplung an der Rückseite eines Zugfahrzeuges - beispielsweise eines Traktors - aus paarweise angeordneten, sich in vertikaler Richtung erstreckenden Führungen zusammen, die mit dem Zugfahrzeug starr verbunden sind. Zwischen den Führungen erstreckt sich ein mit der Anhängekupplung verbundener, brückenartiger Kupplungsträger, der nach Lösen einer Arretierung gegenüber den Führungen höhenverstellbar ist. Etwa in mittiger Höhe der Führungen ist in Vorwärtsrichtung des Zugfahrzeugs vor den Führungen ein Zapfwellenanschluss des Zugfahrzeugs vorgesehen.

Die CH 365 955 A beschreibt eine Anordnung eingangs genannter Art. Die Anordnung besteht aus zwei vertikal orientierten Schienen, deren sich nach außen erstreckende Verstärkung im Bereich eines Zapfwellenanschlusses unterbrochen ist, um die Zugänglichkeit zur Zapfwelle zu verbessern.

Die nachveröffentlichte WO 2008/053354 A2 zeigt eine höhenverstellbare Kupplungsanordnung mit einer vertikalen Führungsschiene, aus der ein Mittelstück herausnehmbar ist. Bei einer Ausführungsform erfolgt die Anbringung des Mittelstücks mittels eines einzigen Stiftes, der sich quer zur Vorwärtsrichtung und horizontal erstreckt.

### Aufgabenstellung

Als nachteilig wird bei dem beschriebenen Stand der Technik angesehen, dass der zwischen den Führungen verbleibende Zwischenraum den Durchmesser der Zapfwelle begrenzt. Bei der Anordnung nach CH 365 955 A ist aufgrund der im Bereich der Zapfwelle unterbrochenen Verstärkung der Schienen keine Anbringung der Kupplung in der Höhe der Zapfwelle möglich.

Die der Erfindung zu Grunde liegende Aufgabe wird darin gesehen, eine Anordnung zur höhenverstellbaren Anbringung einer Anhängekupplung bereitzustellen, die es trotz eines vorgegebenen Abstands zwischen den Führungen zur Aufnahme des Kupplungsträgers ermöglicht, bei Bedarf eine Zapfwelle zu verwenden, deren Außendurchmesser des Abstand zwischen den Führungen überschreitet. Auch soll ermöglicht werden, dass der Kupplungsträger über die gesamte Höhe der Führungen verstellt und in der gewünschten Position festgesetzt werden kann.

### Lösung der Aufgabe

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Anordnung zur höhenverstellbaren Anbringung einer Anhängekupplung an einem Zugfahrzeug umfasst zwei gegenüberliegende, sich in vertikaler Richtung erstreckende Führungen. Zwischen den beiden Führungen kann ein mit einer Anhängekupplung verbundener, brückenartiger Kupplungsträger höhenverstellbar angeordnet werden. Ein Zapfwellenanschluss befindet sich bezüglich der Vorwärtsrichtung des Zugfahrzeugs vor dem Zwischenraum zwischen den Führungen und in der Regel in mittiger Höhe der Führungen. Die aneinander zugewandten Innenseiten der Führungen sind jeweils mit einem ausgesparten Bereich ausgestattet. In diese ausgesparten Bereiche können in die ausgesparten Bereiche hineinpassende Adapterstücke eingesetzt werden. Zur lösbaren Anbringung der Adapterstücke an den Führungen dienen jeweils zwei oder mehr Zapfen, die in komplementäre Öffnungen in den Führungen einführbar sind. Die Bewegungsrichtung beim Ein- und Ausbau der Adapterstücke ist horizontal und quer zur Vorwärtsrichtung des Zugfahrzeugs, so dass sich die genannten Zapfen ebenfalls vorzugsweise quer zur Vorwärtsrichtung erstrecken. Die Zapfen sind starr, insbesondere unlösbar, mit dem Adapterstück verbunden, so dass sie gemeinsam mit dem Adapterstück in die Führungen eingeführt und gemeinsam damit wieder ausgebaut werden.

Wenn die Adapterstücke in die ausgesparten Bereiche eingefügt sind, kann der Kupplungsträger über die gesamte Höhe der Führungen einschließlich der Adapterstücke verstellt und in der gewünschten Position festgesetzt werden. Sind die Adapterstücke hingegen demontiert, entsteht jeweils eine Lücke in jeder Führung, in der Regel etwa in ihrer Mitte bzw. in Höhe des Zapfwellenanschlusses, so dass der Kupplungsträger nur oberhalb oder unterhalb der ausgesparten Bereiche mit den Führungen verbunden, bzw. ganz von der Anordnung abgenommen werden kann. Die durch die von den Führungen abgenommenen Adapterstücke entstehende Lücke ermöglicht die Entstehung eines Zwischenraumes zwischen den Führungen, der gegenüber dem sich bei an den Führungen angebrachten Adapterstücken ergebenden Zwischenraum vergrößert ist. Dieser Zwischenraum kann insbesondere dazu dienen, eine Zapfwelle mit einem Durchmesser am Zapfwellenanschluss anzubringen, der größer sein kann, als wenn die Adapterstücke an den Führungen montiert sind.

Weiterhin ist eine Möglichkeit zur Verriegelung der Adapterstücke an den Führungen sinnvoll. Bei der Verwendung der erwähnten Zapfen können Riegelstifte vorgesehen sein, die sich durch Öffnungen in den Zapfen und vorzugsweise auch in der jeweiligen Führung erstrecken. Die Riegelstifte erstrecken sich horizontal und in Vorwärtsrichtung des Zugfahrzeugs und sind auch in dieser Richtung bewegbar, um die Adapterstücke zu entriegeln oder zu verriegeln.

Um wiederum die Riegelstifte zu verrasten, kann eine Riegelhalterung vorgesehen sein, die mit der zugehörigen Führung verrastbar ist. Dazu können die Riegelstifte verschiebbar an der Riegelhalterung befestigt sein, während die Riegelhalterung mit einem Langloch und einer in das Langloch übergehenden, kreisförmigen Öffnung versehen ist, deren Durchmesser größer als die Breite des Langlochs ist. Die Öffnung ist über den Kopf eines mit der Führung verbundenen Stifts mit T-förmigem Profil einführbar, während das Langloch schmaler als der Kopf ist. Dadurch erreicht man, dass die Riegelhalterung in auf den Stift aufgesetzter Position nur in Längsrichtung des Langlochs verschiebbar und davon nur abnehmbar ist, wenn die Öffnung im Bereich des Stifts ist. Befindet sich das Langloch oberhalb der kreisförmigen Öffnung, wird die Riegelhalterung durch die Schwerkraft in Richtung auf die arretierende Position vorgespannt. Die beschriebene Anordnung kann mit einer einzigen Hand und ohne Verwendung irgendwelcher Werkzeuge bedient werden und ermöglicht eine einfache und sichere Verrastung der Adapterstücke. Letztere können, wenn sie nicht an der Innenseite der Führung befestigt sind, in einer Parkposition an deren Außenseite befestigt werden.

### Ausführungsbeispiele

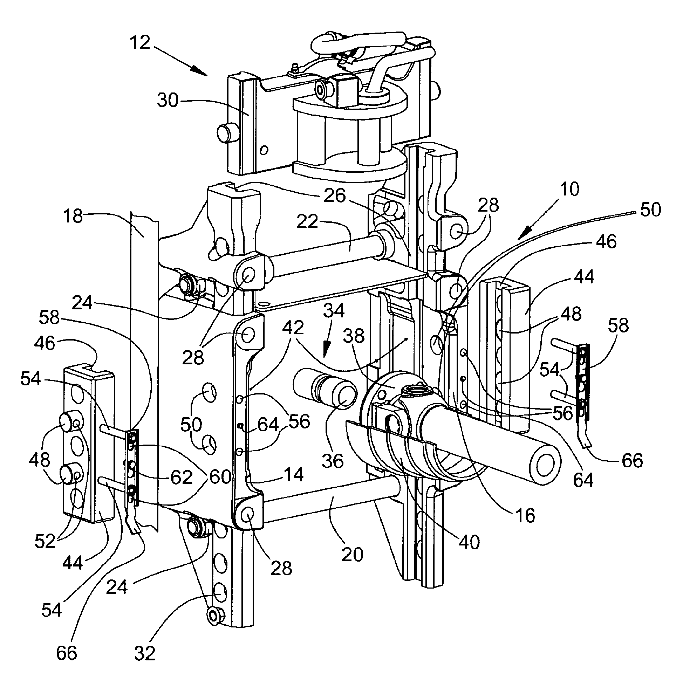

In der Zeichnung ist ein nachfolgend näher beschriebenes Ausführungsbeispiel der Erfindung dargestellt. Sie zeigt eine perspektivische Ansicht einer erfindungsgemäßen Anordnung zur höhenverstellbaren Anbringung einer Anhängekupplung, wobei Adapterstücke der Führungen im demontierten Zustand gezeigt sind und der Kupplungsträger sowie die Zapfwelle zur Veranschaulichung ebenfalls zur Veranschaulichung in demontierten Positionen dargestellt werden.

Eine Anordnung 10 zur höhenverstellbaren Anbringung einer Anhängekupplung 12 an einem Zugfahrzeug umfasst zwei sich gegenüber liegende, sich vertikal erstreckende Führungen 14, 16, die am Rahmen 18 des Zugfahrzeugs befestigt sind, bei dem es sich insbesondere um einen Traktor zur Verwendung in der Landwirtschaft oder für kommunale Aufgaben handelt. Die Führungen 14, 16 sind zueinander spiegelbildlich gestaltet. Sie sind in der Regel als Gussteile ausgeführt. Die Führungen 14, 16 sind untereinander durch eine horizontale untere Querstrebe 20 und eine horizontale obere Querstrebe 22 verbunden, die sich jeweils endseitig durch Öffnungen in den Führungen 14, 16 erstrecken und mit Gewinden versehen sind, auf die an den Führungen anliegende Muttern 24 aufgeschraubt sind. Die Führungen 14, 16 sind mit sich in Vorwärtsrichtung des Zugfahrzeugs erstreckenden Bohrungen 28 ausgestattet, durch die sich Schrauben (nicht gezeigt) erstrecken, um die Führungen 14, 16 mit dem Rahmen 18 oder einem anderen geeigneten Teil des Zugfahrzeugs, z. B. einem Getriebeblock, zu verbinden.

Die Führungen 14, 16 weisen an den einander zugewandten Innenseiten Führungsnuten 26 auf, die sich in vertikaler Richtung erstrecken. In die Führungsnuten 26 ist ein brückenartiger Kupplungsträger 30 einschiebbar, der mit der Anhängekupplung 12 verbunden ist und zu Ihrer Anbringung an den Führungen 14, 16 dient. Die Führungsnuten 26 ermöglichen es, den Kupplungsträger 30 in vertikaler Richtung gegenüber den Führungen 14, 16 zu verstellen, während ein mit quer zur Vorwärtsrichtung und horizontal verlaufenden Bohrungen 32 am Grund der Führungsnuten 26 zusammenwirkender Arretierungsmechanismus mit in die Bohrungen 32 einführbaren Haltezapfen (nicht gezeigt, s. aber DE 92 11 294 U) am Kupplungsträger 30 es ermöglicht, den Kupplungsträger 30 in unterschiedlichen Höhen dem jeweiligen Anwendungsfall entsprechend an den Führungen zu arretieren.

In halber Höhe der Führungen 14, 16 ist zwischen ihnen und in Vorwärtsrichtung des Zugfahrzeugs vor ihnen ein Zapfwellenanschluss 34 in Form eines Wellenstumpfes 36 angeordnet, der zum lösbaren Anschluss einer Zapfwelle 38 eines Anbaugeräts, z. B. einer Ballenpresse, einer Kreiselegge oder eines Ladewagens dient.

Da der verwendbare Außendurchmesser der Zapfwelle 38, der durch an der eigentlichen Zapfwelle 38 angebrachte Schutzabdeckungen 40 definiert wird, durch den Abstand der Führungen 14, 16 begrenzt wird, sind die Führungen 14, 16 an ihren einander zugewandten Innenseiten etwa im mittleren Bereich ihrer Höhe mit ausgesparten Bereichen 42 ausgestattet. In diese ausgesparten Bereiche 42 sind Adapterstücke 44 einsetzbar. Die Adapterstücke 44 sind mit Nuten 46 ausgestattet, die in ihren Abmessungen mit den Nuten 26 identisch sind, und mit den Nuten 26 in einer gemeinsamen Ebene angeordnet sind, wenn die Adapterstücke 44 in den ausgesparten Bereichen 42 montiert sind. Dadurch erreicht man, dass der Kupplungsträger 30 bei in die ausgesparten Bereiche 42 eingesetzten Adapterstücken 44 über die gesamte Höhe der Führungen 14, 16 einschließlich der Adapterstücke 44, höhenverstellbar ist. Bei demontierten Adapterstücken 44 kann der Kupplungsträger 30 von den Führungen 14, 16 abgenommen oder oberhalb bzw. unterhalb der ausgesparten Bereiche 42 in den Nuten 26 der Führungen 14, 16 festgesetzt werden. Die ausgesparten Bereiche 42 ermöglichen dann eine Anbringung einer Zapfwelle 38 mit einem größeren Außendurchmesser insbesondere der Schutzabdeckung 40 als wenn die Führungen 14, 16, wie im Stand der Technik, über ihre gesamte Höhe durchgehend und ohne ausgesparte Bereiche 42 ausgeführt wären.

Zur Befestigung der Adapterstücke 44 in den ausgesparten Bereichen 42 sind die Adapterstücke 44 mit jeweils zwei, sich horizontal und quer zur Vorwärtsrichtung des Zugfahrzeugs erstreckenden, kreiszylindrischen Zapfen 48 ausgestattet. Die Zapfen 48 erstrecken sich, wenn die Adapterstücke 44 in den ausgesparten Bereichen 42 angeordnet sind, passgenau in übereinander angeordnete, sich horizontal und quer zur Vorwärtsrichtung des Zugfahrzeugs erstreckende, kreiszylindrische Öffnungen 50 in den Seitenteilen der Führungen 14, 16, die sich seitlich außerhalb der ausgesparten Bereiche 42 befinden. Die Zapfen 48 sind wiederum mit sich horizontal und in Vorwärtsrichtung des Zugfahrzeugs erstreckenden, kreiszylindrischen Öffnungen 52 ausgestattet. In die Öffnungen 52 der Zapfen 48 sind Riegelstifte 54 einführbar, die weiterhin durch horizontal und in Vorwärtsrichtung des Zugfahrzeugs erstreckende, kreiszylindrische Öffnungen 56 in den Seitenteilen der Führungen 14, 16, die sich seitlich außerhalb der ausgesparten Bereiche 42 befinden, hindurch einsteckbar sind. Die Öffnungen 50, 52 und 56 sind in der Regel als Bohrungen ausgeführt. Die Riegelstifte 54 sind verschiebbar an plattenförmigen Riegelhalterungen 58 angebracht, indem sie dort in Langlöchern 60 geführt werden. Die Riegelhalterungen 58 sind wiederum mit mittigen, schlüssellochartigen Öffnungen 62 ausgestattet, die sich aus einem oberen Langloch und einer unteren, kreisförmigen Öffnung zusammensetzen, die in das Langloch übergeht. Zwischen den beiden Öffnungen 56 sind rückwärtig an den Seitenteilen der Führungen 14, 16 Stifte 64 angebracht, die einen kreiszylindrischen Körper und einen über den Körper seitlich hinaus ragenden Kopf umfassen.

Die Anbringung der Adapterstücke 44 erfolgt nach alledem in der Weise, dass die Adapterstücke 44 in die ausgesparten Bereiche 42 eingesetzt werden, so dass die Zapfen 48 in die Öffnungen 50 gelangen. Dann werden die Riegelhalterungen 58 derart an den Seitenteilen der Führungen 14, 16 positioniert, dass die Riegelstifte 54 in die Öffnungen 56 eingeschoben werden können. Am Ende der Einschiebbewegung der Riegelstifte 54 wird die Riegelhalterung 58 angehoben, bis der kreisförmige Bereich der Öffnung 62 über den Kopf des Stifts 64 geschoben und die Riegelhalterung 58 anschließend abgesenkt werden kann, so dass das Langloch der schlüssellochartigen Öffnung 62 sich schließlich zwischen dem Kopf des Stifts 64 und dem Seitenteil der Führungen 14, 16 befindet und dort durch die Schwerkraft gesichert wird. Die Riegelhalterung 58 und die Riegelstifte 54 und somit die Zapfen 48 sowie die Adapterstücke 44 sind demnach an den Seitenteilen der Führungen 14, 16 arretiert. Die Anbringung der Adapterstücke 44 kann mit einer einzigen Hand erfolgen, da sie durch die Zapfen 48 zunächst provisorisch gesichert werden. Anschließend kann auch die Anbringung der Riegelhalterungen 58 mit einer einzigen Hand erfolgen, wobei die Riegelhalterungen 58 in der Regel an einer unteren Lasche 66 der Riegelhalterungen 58 angefasst werden. Die Demontage der Adapterstücke 44 erfolgt durch Anheben der Riegelhalterungen 58, Abziehen der Riegelhalterungen 58 nach hinten, was zum Herausziehen der Riegelstifte 54 führt, und Abnehmen der Adapterstücke 44. Werden die Adapterstücke 44 nicht benötigt, können sie an den Außenseiten der Seitenteile der Führungen 14, 16 befestigt werden, indem die Zapfen 48 von außen her in die Öffnungen 50 eingeführt und in der oben beschriebenen Weise durch die Riegelhalterungen 58 mit den Riegelstiften 54 arretiert werden.

## Patentansprüche

1. Anordnung (10) zur höhenverstellbaren Anbringung einer Anhängekupplung (12) an einem Zugfahrzeug, mit zwei sich gegenüberliegend angeordneten, in vertikaler Richtung erstreckenden Führungen (14, 16), zwischen denen ein mit einer Anhängekupplung (12) verbundener Kupplungsträger (30) höhenverstellbar anordenbar ist, wobei dem Zwischenraum zwischen den Führungen (14, 16) ein Zapfwellenanschluss (34) zugeordnet ist und die Führungen (14, 16) an ihren aneinander zugewandten Innenseiten jeweils mit wenigstens einem ausgesparten Bereich (42) versehen sind,
**dadurch gekennzeichnet, dass** den ausgesparten Bereichen (42) komplementäre, lösbare Adapterstücke (44) zugeordnet sind, sodass der Kupplungsträger (30) mit den an den Führungen (14, 16) angebrachten Adapterstücken (44) zusammenwirken kann und bei von den Führungen (14, 16) abgenommenen Adapterstücken (44) ein vergrößerter Zwischenraum zwischen den Führungen (14, 16) entsteht,
und dass die Adapterstücke (44) mit jeweils mehreren, sich horizontal und quer zur Vorwärtsrichtung des Zugfahrzeugs erstreckenden Zapfen (48) versehen sind, die in komplementäre Öffnungen (50) in den Führungen (14, 16) einführbar sind.

2. Anordnung (10) nach Anspruch 1, **dadurch gekennzeichnet, dass** sich die ausgesparten Bereiche (42) zumindest näherungsweise in Höhe des Zapfwellenanschlusses (34) befinden.

3. Anordnung (10) nach einem der Ansprüche 1 oder 2, **dadurch gekennzeichnet, dass** die Adapterstücke (44) an den Führungen (14, 16) verriegelbar sind.

4. Anordnung (10) nach Anspruch 3, **dadurch gekennzeichnet, dass** die Zapfen (48) mit sich horizontal und in Vorwärtsrichtung des Zugfahrzeugs erstreckenden Öffnungen (52) versehen sind, in die Riegelstifte (54) einführbar sind.

5. Anordnung (10) nach Anspruch 4, **dadurch gekennzeichnet, dass** die Riegelstifte (54) sich auch durch Öffnungen (56) in den Führungen (14, 16) erstrecken.

6. Anordnung (10) nach Anspruch 5, **dadurch gekennzeichnet, dass** die Riegelstifte (54) verschiebbar an einer Riegelhalterung (58) angebracht sind, die an der Führung (14, 16) verrastbar ist.

7. Anordnung (10) nach Anspruch 6, **dadurch gekennzeichnet, dass** die Riegelhalterung (58) mit einem Langloch und einer in das Langloch übergehenden, kreisförmigen Öffnung (62) versehen ist, deren Durchmesser größer als die Breite des Langlochs ist, und dass die Öffnung (62) über den Kopf eines mit der Führung verbundenen Stifts (64) steckbar ist, während das Langloch schmaler als der Kopf ist, so dass die Riegelhalterung (58) in auf den Stift aufgesetzter Position nur in Längsrichtung des Langlochs verschiebbar und davon nur abnehmbar ist, wenn die Öffnung im Bereich des Stifts (64) ist.

8. Anordnung (10) nach Anspruch 7, **dadurch gekennzeichnet, dass** das Langloch im montierten Zustand oberhalb der kreisförmigen Öffnung angeordnet ist.

9. Landwirtschaftliches Nutzfahrzeug mit einem Rahmen (18) und einer daran befestigten Anordnung (10) nach einem der vorhergehenden Ansprüche.

## Claims

1. Assembly (10) for the height-adjustable attaching of a draw bar (12) to a towing vehicle, with two oppositely arranged guides (14, 16) which extend in the vertical direction and between which a coupling support (30), which is connected to a draw bar (12), can be arranged in a height-adjustable manner, wherein a power take-off connection (34) is assigned to the intermediate space between the guides (14, 16), and the mutually facing insides of the guides (14, 16) are each provided with at least one recessed region (42), **characterized in that** the recessed regions (42) are assigned complementary, releasable adaptor pieces (44) such that the coupling support (30) can interact with the adaptor pieces (44) attached to the guides (14, 16) and, when the adaptor pieces (44) are removed from the guides (14, 16), an enlarged intermediate space arises between the guides (14, 16), and **in that** the adaptor pieces (44) are each provided with a plurality of journals (48) which extend horizontally and transversely with respect to the forwards direction of the towing vehicle and can be inserted into complementary openings (50) in the guides (14, 16).

2. Arrangement (10) according to Claim 1, **characterized in that** the recessed regions (42) are at least approximately located level with the power take-off connection (34).

3. Assembly (10) according to either of Claims 1 and 2, **characterized in that** the adaptor pieces (44) can be locked to the guides (14, 16).

4. Assembly (10) according to Claim 3, **characterized in that** the journals (48) are provided with openings (52) which extend horizontally and in the forwards direction of the towing vehicle and into which locking pins (54) can be inserted.

5. Assembly (10) according to Claim 4, **characterized in that** the locking pins (54) also extend through openings (56) in the guides (14, 16).

6. Assembly (10) according to Claim 5, **characterized in that** the locking pins (54) are attached displaceably to a locking holder (58) which can be latched to the guide (14, 16).

7. Assembly (10) according to Claim 6, **characterized in that** the locking holder (58) is provided with an elongated hole and with a circular opening (62) which merges into the elongated hole and the diameter of which is larger than the width of the elongated hole, and **in that** the opening (62) can be placed over the head of a pin (64) connected to the guide while the elongated hole is narrower than the head, and therefore the locking holder (58), in the position in which it is placed onto the pin, can be displaced only in the longitudinal direction of the elongated hole and can be removed therefrom only when the opening is in the region of the pin (64).

8. Assembly (10) according to Claim 7, **characterized in that**, in the fitted state, the elongated hole is arranged above the circular opening.

9. Agricultural utility vehicle with a frame (18) and an assembly (10), which is fastened thereto, according to one of the preceding claims.

## Revendications

1. Agencement (10) pour le montage réglable en hauteur d'un attelage (12) à un véhicule tracteur, comprenant deux guides (14, 16) disposés en regard l'un de l'autre et s'étendant dans la direction verticale, entre lesquels peut être disposé, de manière réglable en hauteur, un support d'accouplement (30) connecté à un attelage (12), l'espace intermédiaire entre les guides (14, 16) étant associé à un raccord de prise de force (34) et les guides (14, 16) étant pourvus sur leurs côtés tournés l'un vers l'autre à chaque fois d'au moins une région évidée (42),
**caractérisé en ce que** les régions évidées (42) sont associées à des éléments adaptateurs complémentaires amovibles (44), de sorte que le support d'accouplement (30) puisse coopérer avec les éléments adaptateurs (44) montés sur les guides (14, 16) et qu'il existe, lorsque les éléments adaptateurs (44) sont retirés des guides (14, 16), un espace intermédiaire agrandi entre les guides (14, 16),
et **en ce que** les éléments adaptateurs (44) sont pourvus à chaque fois de plusieurs tourillons (48) s'étendant horizontalement et transversalement à la direction d'avance du véhicule tracteur, lesquels peuvent être introduits dans des ouvertures complémentaires (50) dans les guides (14, 16).

2. Agencement (10) selon la revendication 1, **caractérisé en ce que** les régions évidées (42) se trouvent au moins approximativement à la hauteur du raccord de prise de force (34).

3. Agencement (10) selon l'une quelconque des revendications 1 ou 2, **caractérisé en ce que** les éléments adaptateurs (44) peuvent être verrouillés aux guides (14, 16).

4. Agencement (10) selon la revendication 3, **caractérisé en ce que** les tourillons (48) sont pourvus d'ouvertures (52) s'étendant horizontalement et dans la direction d'avance du véhicule tracteur, dans lesquelles peuvent être introduites des goupilles de verrouillage (54).

5. Agencement (10) selon la revendication 4, **caractérisé en ce que** les goupilles de verrouillage (54) s'étendent aussi à travers des ouvertures (56) dans les guides (14, 16).

6. Agencement (10) selon la revendication 5, **caractérisé en ce que** les goupilles de verrouillage (54) sont montées de manière déplaçable sur un support de verrouillage (58) qui peut être encliqueté sur le guide (14, 16).

7. Agencement (10) selon la revendication 6, **caractérisé en ce que** le support de verrouillage (58) est pourvu d'un trou oblong et d' une ouverture (62) de forme circulaire, se prolongeant dans le trou oblong, dont le diamètre est supérieur à la largeur du trou oblong, et **en ce que** l'ouverture (62) peut être passée par-dessus la tête d'une goupille (64) connectée au guide, tandis que le trou oblong est plus étroit que la tête, de sorte que le support de verrouillage (58) ne peut être déplacé dans la position posée sur la goupille que dans la direction longitudinale du trou oblong et ne peut en être retiré que lorsque l'ouverture se trouve dans la région de la goupille (64).

8. Agencement (10) selon la revendication 7, **caractérisé en ce que** le trou oblong est disposé dans l'état monté au-dessus de l'ouverture de forme circulaire.

9. Véhicule utilitaire agricole comprenant un châssis (18) et un agencement (10) fixé sur celui-ci, selon l'une quelconque des revendications précédentes.
